# EUROPÄISCHE PATENTSCHRIFT

(11) **EP 2 501 938 B1**
(45) Veröffentlichungstag und Bekanntmachung des Hinweises auf die Patenterteilung: **03.01.2018**
(21) Anmeldenummer: 10779764.9
(22) Anmeldetag: 11.11.2010
(51) Int. Cl.: F04D 15/00, H02K 11/00, H02K 5/22, H02K 11/28

(54) **KREISELPUMPENANORDNUNG MIT STEUER- UND/ODER REGELGERÄT**
ROTARY PUMP ARRANGEMENT HAVING A CONTROLLER AND/OR REGULATOR
AGENCEMENT DE POMPE CENTRIFUGE AVEC APPAREIL DE COMMANDE ET/OU DE RÉGULATION

(30) Priorität: 17.11.2009 DE 102009053320
(43) Veröffentlichungstag der Anmeldung: 26.09.2012
(73) Patentinhaber: KSB Aktiengesellschaft, 67227 Frankenthal (DE)
(72) Erfinder: GONTERMANN, Daniel, 67227 Frankenthal (DE)
(86) Internationale Anmeldenummer: PCT/EP2010/067276
(87) Internationale Veröffentlichungsnummer: WO 2011/061112

(56) Entgegenhaltungen:
- DE-A1- 3 508 049
- DE-A1- 10 017 145
- DE-A1- 10 046 085
- DE-C1- 3 211 814
- DE-T2- 68 906 605
- K¦HLER B ET AL: "Mechatronisches Pumpensystem mit intelligenten, integrierten Antrieben", KONSTRUKTION, SPRINGER VDI VERLAG, DUSSELDORF, DE, Bd. 6-2000, 1. Januar 2000 (2000-01-01), Seiten 27-29, XP009088863, ISSN: 0720-5953 in der Anmeldung erwähnt

## Beschreibung

Die Erfindung betrifft eine Kreiselpumpenanordnung mit Kreiselpumpe, Elektromotor und einem Steuer- und/oder Regelgerät, wobei das Steuer- und/oder Regelgerät am Elektromotor angebracht ist, wobei das Steuer- und/oder Regelgerät an eine starre elektrische Versorgungsspannung angeschlossen ist, wobei ein Stellglied des Steuer- und/oder Regelgeräts die Drehzahl und/oder das Drehmoment des Elektromotors mit einer variablen elektrischen Ausgangsgröße beeinflusst.

Bei einer Kreiselpumpenanordnung, die unter anderem aus ein oder mehreren Kreiselpumpen und/oder ein oder mehreren Elektromotoren und/oder ein oder mehreren Kreiselpumpenaggregaten besteht, ist oft ein elektronisches Steuer- und/oder Regelgerät zur Beeinflussung der Drehzahl und/oder des Drehmomentes an der Kreiselpumpenanordnung vorhanden, das einen oder mehrere Elektromotoren steuert und/oder regelt. Insbesondere sind hierzu Drehzahlregelgeräte, wie etwa Frequenzumrichter mit Regelelektronik, verbreitet. Ein solches Drehzahlregelgerät besitzt üblicherweise ein Stellglied, das die Drehzahl eines angeschlossenen asynchronen oder synchronen Elektromotors mittels einer frequenzveränderlichen Ausgangsspannung beeinflusst.

Die DE 100 46 085 A1 offenbart eine temperaturabhängige, elektronisch gesteuerte Drehzahländerung für Umwälzpumpen für Anlagen zur Wärmegewinnung oder Kälteerzeugung. Mittels eines Temperaturfühlers wird die Temperatur an einer Wärmequelle ermittelt und an eine Nebensteuereinheit weitergeleitet, die eine optimale Drehzahl der Umwälzpumpe errechnet.

Die 32 11 814 C1 offenbart eine Umwälzpumpe für Heizungsanlagen, deren Motor durch Wicklungsumschaltung stufenweise auf mindestens zwei vorgegebene Drehzahlen eingestellt werden kann, von denen die niedrigste Drehzahl zum Betrieb der Anlage in einer Sparstufe ausgelegt ist und jede höhere Drehzahl einer anderen Betriebsstufe der Anlage zugeordnet ist. Ausgehend von einer der höheren vorgegebenen Drehzahlen kann die Motordrehzahl stufenlos in Richtung der nächstniedrigeren Drehzahl auf eine Arbeitsdrehzahl eingeregelt werden.

In der DE 35 08 049 A1 wird eine Schaltungsanordnung zum Einstellen der Förderleistung einer Umwälzpumpe vorgeschlagen, bei der eine zur Strömungsgeschwindigkeit des Heizungswassers proportionale Spannung auf einen Regler gegeben wird, der eine Steuereinheit beaufschlagt, durch welche der Elektromotor der Pumpe auf unterschiedliche Drehzahlen umgeschaltet werden kann.

Die DE 689 06 605 T2 offenbart eine Anordnung zweier gekoppelter Elektromotoren, die jeweils mechanisch mit einer anderen Pumpe verbunden sind, welche in dasselbe hydraulische Netz liefern. Die Motoren sind mit einer speziellen Verbindungseinrichtung versehen, die mit den verschiedenen Spulendrähten der Motoren verbunden sind, und sind in der Lage, den automatischen Betrieb eines Motors im Falle des Versagens des anderen Motors zu gewährleisten.

Aus der DE 87 038 32 U1 ist es bekannt, die Drehzahl eines Kreiselpumpenaggregates durch einen Umschaltstecker mit verschiedenen Steckstellungen zu ändern. Das darin beschriebene Kreiselpumpenaggregat ist mit einem ein- und ausschaltbaren Motorschutzschalter ausgestattet, um den Elektromotor vor einer thermischen Überlastung zu schützen. Mit einem solchen Umschaltstecker lässt sich die Drehzahl des Kreiselpumpenaggregates nur in einigen wenigen Stufen und nicht stufenlos, also kontinuierlich verändern. Das Abschalten des Pumpenaggregates bei thermischer Überlastung hat zudem einen vollständigen Ausfall einer Anlage zur Folge. Dies erfordert ein zweites Pumpenaggregat, das bei Störung des ersten selbsttätig eingeschaltet wird.
Aus Köhler, B. ; Mewes, F.: "Mechatronisches Pumpensystem mit intelligenten, integrierten Antrieben", veröffentlicht in Konstruktion, Bd. 6-2000, Seiten 27-29, ist eine Kreiselpumpenanordnung mit einem Integralantrieb, aufgebaut aus einem Elektromotor und einem motorintegrierten, aus Frequenzumrichter und Regelelektronik bestehenden Drehzahlregelgerät, bekannt. Der das Stellglied des Drehzahlregelgerätes bildende Frequenzumrichter besteht aus einer Ansteuereinheit und einem Energiesteller. Das Drehzahlregelgerät ist am Antriebsmotor des Pumpenaggregates montiert und regelt die Drehzahl des Kreiselpumpenaggregates stufenlos. Die Drehzahl des Kreiselpumpenaggregates ist durch Änderung der Arbeitsfrequenz des Frequenzumrichters veränderbar. In einem Wartungsfall oder bei einem erforderlichen Austausch des Drehzahlregelgeräts muss eine Elektrofachkraft das Drehzahlregelgerät von der Netzzuleitung und dem Elektromotor abklemmen. Die Netzzuleitung ist sodann direkt am Motorklemmbrett des Elektromotors anzuschließen. Die Elektrofachkraft muss während der Wartungs- oder Austauscharbeiten die Netzzuleitung spannungsfrei schalten. Abgesehen vom dadurch bedingten Zeitaufwand fallen je nach vorhandener Verschaltung unter Umständen noch weitere Aggregate aus. Falls vom betroffenen Anlagenprozess gefordert, ist vor den Arbeiten ein Ersatzaggregat bereitzustellen und in Betrieb zu nehmen.
Durch die EP 0 449 153 A2 ist ein Kreiselpumpenaggregat bekannt, bei dem Pumpenaggregat und ein den Elektromotor speisender Frequenzumrichter mit Regelelektronik eine bauliche Einheit bilden. Um einen Ausfall der vom Pumpenaggregat versorgten Anlage im Falle einer thermischen Überlastung des Pumpenaggregats zu vermeiden, wird beim Erreichen einer den Überlastzustand kennzeichnenden Grenztemperatur die Motordrehzahl durch Ansteuern des Frequenzumrichters abgesenkt. Auf einen Ausfall des Frequenzumrichters ist allerdings auch diese Anordnung nicht vorbereitet.

Aufgabe der vorliegenden Erfindung ist es, eine Kreiselpumpenanordnung mit einem drehzahl- und/oder drehmomentveränderbaren Kreiselpumpenaggregat und einem Steuer- und/oder Regelgerät zur Beeinflussung der Drehzahl und/oder des Drehmomentes des Kreiselpumpenaggregates zu schaffen, das mit wenig aufwändigen Mitteln einen ausfallsicheren Betrieb des Kreiselpumpenaggregates gewährleistet.

Diese Aufgabe wird erfindungsgemäß durch die kennzeichnenden Merkmale des Anspruchs 1 gelöst, und zwar dadurch, dass das Steuer- und/oder Regelgerät einen von Hand betätigbaren Schalter aufweist, der eine erste Schaltstellung aufweist, bei der der Schalter den Elektromotor über das Stellglied des Steuer- und/oder Regelgerätes mit der Versorgungsspannung elektrisch verbindet, so dass der Elektromotor mit der variablen elektrischen Ausgangsgröße des Stellgliedes gespeist wird, und eine zweite Schaltstellung aufweist, bei der der Schalter den Elektromotor mit der starren elektrischen Versorgungsspannung elektrisch verbindet, so dass der Elektromotor an der starren Versorgungsspannung betrieben wird, und dass der Schalter bei einem Fehler des Stellgliedes und/oder einer anderen elektronischen Komponente des Steuer und/oder Regelgerätes, wie einer Regelelektronik des Stellgliedes, selbsttätig den Elektromotor auf die Versorgungsspannung umschaltet. Dabei kann der Schalter durch ein Vorspannelement wie eine Feder vorgespannt ausgeführt sein. Durch ein zusätzliches Selbsthaltemittel kann der Schalter aktiv in seiner ersten Schaltstellung gehalten sein. Durch ein Deaktivieren des Selbsthaltemittels schaltet der vorgespannte Schalter selbsttätig in seine zweite Schaltstellung. Das Selbsthaltemittel kann dabei durch eine elektrische Spannung beispielsweise elektromagnetisch in seinem aktiven Zustand gehalten sein. Eine solche Haltespannung wird vorzugsweise durch das Stellglied bereitgestellt. Bei einem Wegfall der Haltespannung öffnet das Selbsthaltemittel und das Vorspannelement des Schalters schaltet den Schalter in seine zweite Schaltstellung. Bei einem Ausfall oder Fehler des Stellgliedes wird somit ein automatisches Umschalten erwirkt. Es ist zusätzlich vorgesehen, eine solche Auslösung der Selbsthaltung über Meldemittel, insbesondere an eine übergeordnete Leittechnik, weiterzuleiten. Die Meldemittel sind dazu idealerweise als potentialfreie Meldekontakte ausgeführt, die mechanisch an die Kontakte des Schalters gekoppelt sind. Die Erfindung ermöglicht das direkte Schalten von Hand von einem Elektromotor zugeführten elektrischen Spannungen und Strömen. Ein Handschalter ist robust und unabhängig von weiteren, insbesondere vom Vorhandensein einer Versorgungsspannung abhängigen, Komponenten sicher bedienbar. Durch die Erfindung ist dadurch in einfacher Weise ein Steuer- und/oder Regelgerät zur Beeinflussung der Drehzahl und/oder des Drehmomentes einer Kreiselpumpe geschaffen, das ohne ein Umklemmen einer Netzzuleitung vom Steuer- und/oder Regelgerät auf den Motor eine bedarfsweise Umgehung von elektronischen Komponenten des Steuer- und/oder Regelgerätes, insbesondere dessen Stellgliedes oder einer Regel- und/oder Steuerelektronik des Steuer- und/oder Regelgerätes, gewährleistet. Dies ist vorteilhaft bei einem Ausfall des Stellgliedes und/oder einer oder mehrerer anderer elektronischer Komponenten oder Baugruppen des Steuer- und/oder Regelgerätes. Durch einfaches Umschalten des handbetätigbaren Schalters verbindet dieser den Elektromotor direkt mit der elektrischen Versorgungsspannung, so dass der Elektromotor direkt an der Versorgungsspannung betrieben wird. Besonders vorteilhaft ist, dass durch die Erfindung eine kostengünstige Umgehung von fehlerhaften Komponenten des Gerätes ohne Elektrofachkräfte ermöglicht ist.

Nach einer vorteilhaften Ausgestaltung ist es vorgesehen, dass der Schalter in das Gehäuse des Steuer- und/oder Regelgerätes integriert ist.

Nach der Erfindung ist das Gerät am Elektromotor angebaut oder an diesem befestigt, also motormontiert ausgeführt. Es kann mit dem Elektromotor eine bauliche Einheit bilden oder in diesen integriert sein. Es hat sich als zweckmäßig erwiesen, dass das Steuer- und/oder Regelgerät und/oder der in dessen Gehäuse integrierte Schalter in einer Schutzartausführung höherwertig als die Schutzartklasse IP 20, vorzugsweise in einer Schutzartklasse IP 55 oder höherwertig, ausgeführt ist. Dadurch ist das Steuer- und/oder Regelgerät als selbstständiges Feldgerät an einer Kreiselpumpe einsetzbar.

Von Vorteil ist es, dass das Steuer- und/oder Regelgerät an eine mehrphasige, elektrische Versorgungsspannung angeschlossen ist und das Stellglied den Elektromotor mit einer veränderlichen, vorzugsweise hinsichtlich ihrer Frequenz veränderlichen, mehrphasigen elektrischen Spannung versorgt und dass der Schalter mehrpolig ausgeführt ist. Insbesondere kann an das Steuer- und/oder Regelgerät eine dreiphasige elektrische Versorgungsspannung angeschlossen sein, wodurch ein herkömmlicher Drehstromelektromotor mit asynchronem oder synchronem Wirkprinzip durch das Gerät an einer dreiphasigen Versorgungsspannung betrieben werden kann. Zweckmäßigerweise ist der Schalter dabei dreipolig ausgeführt.

Als zweckmäßig hat es sich erwiesen, dass der Schalter elektromechanisch schaltet. Ein solcher Schalter schaltet alleine aufgrund einer auf ihn ausgeübten manuellen Kraft. Es sind keine Hilfsenergien zur Betätigung des Schalters erforderlich. Insbesondere sind gemäß der Erfindung zum Schalten vorgesehene elektronische Komponenten nicht notwendig bzw. eventuelle elektronische Komponenten des Steuer- und/oder Regelgerätes werden umgangen. Dadurch erwirkt der Schalter in jedem Falle ein sicheres Umschalten.

Besonders vorteilhaft ist eine Ausgestaltung, wonach der Schalter eine weitere Schaltstellung, vorzugsweise eine Nullstellung, aufweist. Dabei ist der Schaltweg von der ersten Schaltstellung zur zweiten Schaltstellung über eine Nullstellung geführt. In der Nullstellung ist nur der Pol des Schalters spannungsführend. Dadurch ist in der Nullstellung zumindest der Elektromotor spannungsfrei geschaltet. Besonders vorteilhaft ist eine Anordnung des Schalters, bei der in der Nullstellung weder Elektromotor noch Stellglied mit der Versorgungsspannung verbunden sind. Das Stellglied kann dadurch jederzeit spannungsfrei geschaltet werden, um Wartungsarbeiten oder eine Nachrüstung von Erweiterungsmodulen durchführen zu können. Des Weiteren verhindert die Nullstellung durch den Schaltweg und den dadurch bedingten Zeitverzug zwischen erster und zweiter Schaltstellung eine gleichzeitige Versorgung des Motors durch die starre Versorgungsspannung und der Ausgangsspannung des Stellgliedes. Dadurch ist ein ruckfreies und für das speisende Versorgungsnetz problemloses Schalten von einem Betrieb eines Elektromotors an der Ausgangsspannung des Stellgliedes des Steuer- und/oder Regelgerätes auf einen Betrieb des Elektromotors direkt an der elektrischen Versorgungsspannung oder umgekehrt gewährleistet.

Einen Schutz gegen Wiedereinschalten gewährleistet eine Variante, wonach der Schalter abschließbar ausgeführt ist. Dazu ist das Betätigungselement des Schalters als ein Schlüsselschalter ausgebildet. Dabei ist der Schalter vorzugsweise in einer Nullstellung abschließbar. Der Schalter in Nullstellung ist in abgeschlossenem Zustand gegen Wiedereinschalten gesichert. Zudem ist vorgesehen, dass der Schalter berührungssicher ausgeführt ist. Somit können Wartungsarbeiten am Elektromotor oder am Steuer- und/oder Regelgerät normenkonform und/oder ohne Gefahr für das Wartungspersonal durchgeführt werden.

Viele Anwendungsgebiete erschließt eine Ausgestaltung, bei der das Steuer- und/oder Regelgerät an eine mehrphasige elektrische Versorgungsspannung fester Frequenz angeschlossen ist und das Stellglied den Elektromotor mit einer mehrphasigen elektrischen Spannung variabler Frequenz versorgt. Dabei verbindet der Schalter wahlweise den Elektromotor mit der Spannung variabler Frequenz oder mit der Spannung fester Frequenz oder trennt gegebenenfalls den Elektromotor von der Versorgungsspannung und der veränderlichen Spannung des Steuer- und/oder Regelgerätes. Insbesondere ist vorgesehen, dass der Schalter wahlweise das Stellglied oder direkt den Elektromotor mit der starren Versorgungsspannung verbindet oder gegebenenfalls das Stellglied und den Elektromotor von der Versorgungsspannung trennt.

Als Steuer- und/oder Regelgerät kommt vorteilhafterweise ein Drehzahlregelgerät, vorzugsweise ein Frequenzumrichter mit Regelektronik, zum Einsatz, das mit einer Ausgangsspannung mit einer kontinuierlich veränderlichen Frequenz die Drehzahl des Elektromotors stufenlos regelt.

Die Erfindung bezieht sich allgemein auf Kreiselpumpenanordnungen mit Steuer- und/oder Regelgeräten, die ein Kreiselpumpenaggregat hinsichtlich dessen Drehzahl und/oder Drehmoment beeinflussen. Beispielsweise eignet sich die Erfindung auch bei Anordnungen mit bürstenlosen Gleichstrommotoren, die mit einer Servosteuerung ausgestattet sind.

Ausführungsbeispiele der Erfindung sind in den Zeichnungen dargestellt und werden im Folgenden näher beschrieben. Es zeigen die
- Fig. 1: eine erfindungsgemäße Kreiselpumpenanordnung mit einem Drehzahlregelgerät in einer perspektivischen Ansicht, die
- Fig. 2: eine erfindungsgemäße Kreiselpumpenanordnung mit einem an einem Drehzahlregelgerät angeordneten Schalter mit drei Schaltstellungen in einer schematischen Darstellung und die
- Fig. 3: eine weitere erfindungsgemäße Anordnung mit einem vorgespannten Schalter mit zwei Schaltstellungen in einer Seitenansicht und mit einer Schaltskizze.

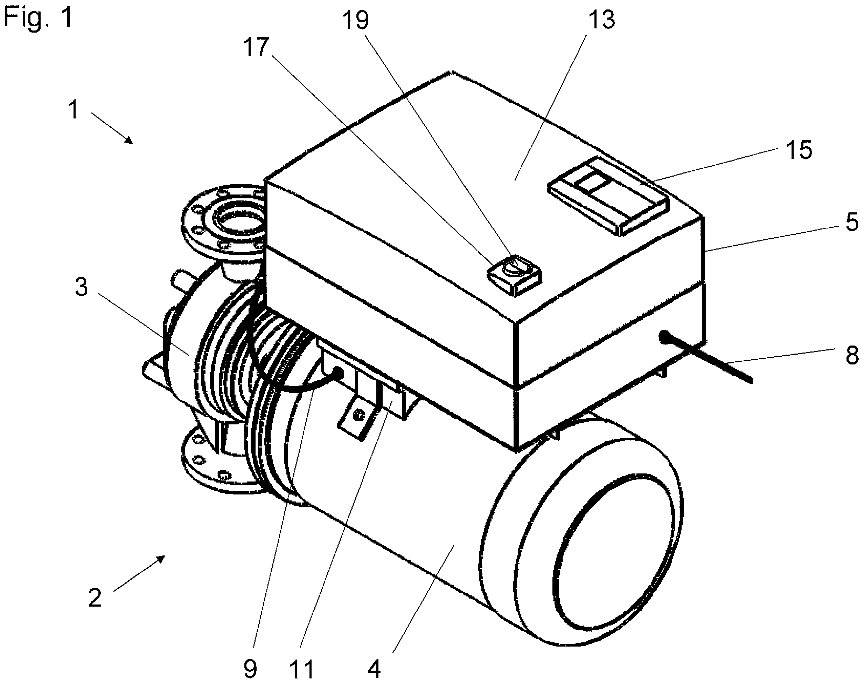

Die Fig. 1 zeigt eine Kreiselpumpenanordnung 1 in einer perspektivischen Ansicht. Die Kreiselpumpenanordnung 1 besteht aus einem Kreiselpumpenaggregat 2 mit einer Kreiselpumpe 3 und einem Elektromotor 4 sowie einem Steuer- und/oder Regelgerät 5 zur Beeinflussung der Drehzahl und/oder des Drehmomentes des Kreiselpumpenaggregates 2. Bei dem Gerät 5 zur Beeinflussung der Drehzahl und/oder des Drehmomentes des Kreiselpumpenaggregates 2 handelt es sich um ein Drehzahlregelgerät in Form eines Frequenzumrichters mit Regelelektronik. Das Drehzahlregelgerät 5 ist am Elektromotor 4 befestigt. Die Befestigung des Drehzahlregelgerätes 5 erfolgt dabei durch - hier nicht gekennzeichnete - Halte- und/oder Aufnahmeelemente eines Adapters. Über eine Leitung 8 ist das Drehzahlregelgerät 5 an ein elektrisches Versorgungsnetz mit starrer dreiphasiger Spannung angeschlossen. Dementsprechend ist die Leitung 8 dreiphasig ausgeführt. Über eine Leitung 9 ist das Drehzahlregelgerät 5 mit einem Klemmenkasten 11 des Elektromotors 4 elektrisch verbunden. Durch diese Leitung 9 kann das Drehzahlregelgerät 5 den Elektromotor 4 mit einer beispielsweise hinsichtlich ihrer Frequenz veränderlichen elektrischen Spannung versorgen und beeinflusst dadurch die Drehzahl des Kreiselpumpenaggregates 2. Zur Erzeugung der veränderlichen elektrischen Spannung weist das Drehzahlregelgerät 5 in seinem Innern und hier nicht erkennbar ein Stellglied, bestehend aus einer Ansteuereinheit und einem Energiesteller, auf, das die Netzspannung in eine Ausgangsspannung veränderlicher Frequenz wandelt. Das Drehzahlregelgerät 5 weist auf seiner Gehäuseoberseite 13 eine Anzeige- und/oder Bedieneinheit 15 auf.

In die Gehäuseoberseite 13 des Drehzahlregelgerätes 5 ist ein von Hand betätigbarer Schalter 17 integriert. Der Schalter 17 weist als Betätigungselement einen von Hand drehbaren Griff 19 auf, mit dem der Schalter 17 mit seinen Schaltkontakten in eine erste Schaltstellung schaltbar ist, bei der der Elektromotor 4 mit der Spannung veränderlicher Frequenz gespeist wird, und in eine zweite Schaltstellung schaltbar ist, bei der der Schalter 17 mit seinen Schaltkontakten den Elektromotor 4 direkt mit der elektrischen Versorgungsspannung verbindet, so dass der Elektromotor 4 direkt an der Netzspannung betrieben wird. In der zweiten Schaltstellung des Schalters 17 wird dabei die innerhalb des Drehzahlregelgerätes 5 befindliche Leistungselektronik zur Erzeugung der veränderlichen Spannung überbrückt oder umgangen. Der Schalter 17 ermöglicht dabei ein rein elektromechanisches Schalten einer dem Elektromotor 4 zugeführten Spannung. Somit ist durch die Erfindung ermöglicht, direkt an einem Kreiselpumpenaggregat 2 eine Umgehung einer veränderlichen Spannung eines motormontierten Drehzahlregelgerätes 5 per Hand zu schalten. An Stelle des hier gezeigten Schalters 17 mit Drehgriff 19 als Betätigungselement liegen eine Vielzahl von anderen Schalterarten und - formen, wie beispielsweise Kippschalter, durch Hebel betätigbare Schalter oder Taster, im Rahmen der Erfindung. Der Schalter 17 ermöglicht in jedem Fall ein unmittelbares Schalten einer Versorgungsspannung des Elektromotors 4 unter Umgehung jeglicher elektronischer Komponenten.

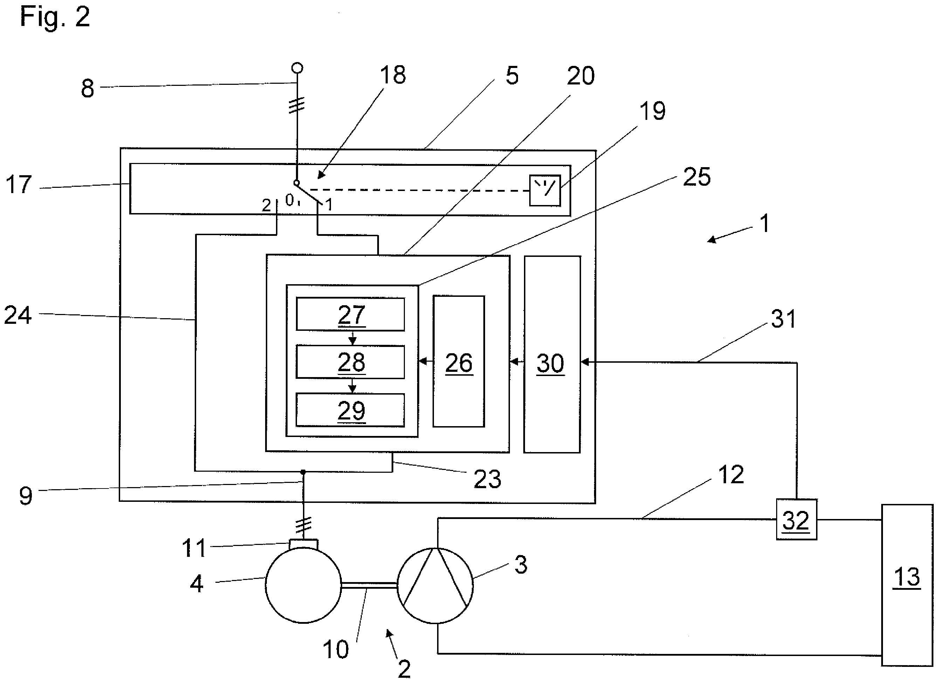

Die Fig. 2 zeigt die Kreiselpumpenanordnung 1 mit dem Drehzahlregelgerät 5 in einer Darstellung, aus der einzelne Komponenten und Baugruppen ersichtlich sind. Das Kreiselpumpenaggregat 2 besteht wiederum aus einer Kreiselpumpe 3 und einem über eine Welle 10 mit der Kreiselpumpe 3 verbundenen Elektromotor 4 mit Klemmenkasten 11. Die Kreiselpumpe 3 wird vom Elektromotor 4 über die Welle 10 angetrieben und fördert in eine Rohrleitung 12 einer Anlage 13. An den Elektromotor 4 ist über einen hier nicht dargestellten Adapter ein Drehzahlregelgerät 5 befestigt. Alternativ ist das Drehzahlregelgerät als ein integraler Bestandteil des Elektromotors 4 ausgebildet. Das Drehzahlregelgerät 5 besitzt einen Schalter 17 mit einem Kontaktelement 18 und einem Betätigungselement 19. In seinem Innern weist das Drehzahlregelgerät 5 ein Stellglied 20 zur Erzeugung einer hinsichtlich deren Frequenz und/oder Amplitude veränderlichen elektrischen Spannung auf. Bei dem Stellglied 20 handelt es sich hier um einen Frequenzumrichter, bestehend aus Energiesteller 25 und Ansteuereinheit 26. Der Energiesteller 25 besteht bei dem Frequenzumrichter 20 aus einem Gleichrichter 27, einem Zwischenkreis 28 und einem dreiphasigen Wechselrichter 29. Als Stellglied kommen im Rahmen der Erfindung auch andere Mittel zur Beeinflussung der Drehzahl- und/oder des Drehmomentes eines Elektromotors zum Einsatz, beispielsweise Stromrichter, Servosteller oder Phasenanschnittsteuerungen. Das Drehzahlregelgerät 5 weist weiterhin eine mikrorechnerbasierte Regelelektronik 30 zur Steuerung- und/oder Regelung des Kreiselpumpenaggregates 2 auf. Die Regelelektronik 30 dient insbesondere der Steuerung- und/oder Regelung des Stellgliedes 20 in Abhängigkeit eines anlagenseitig vorgegebenen Sollwertes, beispielsweise eines Drucksollwertes einer Druckerhöhungsanlage. Im gezeigten Ausführungsbeispiel ist die Regelelektronik 30 mit einer Anlagen- oder Prozessmesstechnik 32 verbunden, von der die Regelelektronik 30 über eine Rückführung 31 Messgrößen, wie beispielsweise einen druckseitigen Druckwert, aus dem Anlagenprozess erhält. Weiterhin kann die Regelelektronik 30 eine Schnittstelle zur Kommunikation mit übergeordneten Systemen wie einer Pumpenleittechnik aufweisen.

Über eine Leitung 8 ist das Drehzahlregelgerät 5 und der Schalter 17 mit einem dreiphasigen elektrischen Versorgungsnetz verbunden. Aus Gründen der Übersichtlichkeit sind mehrphasige Leitungen hier gebündelt dargestellt. Über eine Leitung 9 wird die Ausgangsspannung des Drehzahlregelgerätes 5 dem Klemmenkasten 11 des Elektromotors 4 und dadurch dem Elektromotor 4 zugeführt. Durch Drehen des Betätigungselementes 19 ist der Schalter 17 in verschiedene Schaltstellungen schaltbar. Diese Schaltstellungen sind in der Figur mit Ziffern "1", "0" und "2" gekennzeichnet. Des Weiteren ist in der Schaltskizze durch eine gestrichelt gezeichnete Linie die unmittelbare Wirkverbindung des Betätigungselementes 19 auf die verschiedenen Schaltstellungen "1", "0", "2" des Schalters 17 gezeigt.

In einer ersten Schaltstellung "1" verbindet der Schalter 17 mit seinen Kontakten 18 das Stellglied 20 mit dem elektrischen Versorgungsnetz. Der Elektromotor 4 wird über eine Leitung 23 mit dem Energiesteller 25 des Stellgliedes 20 des Drehzahlregelgerätes 5 verbunden und so mit der veränderlichen elektrischen Ausgangsspannung des Energiestellers 25 versorgt. In der Schalterstellung "2" verbindet der Schalter 17 den Elektromotor 4 direkt mit der elektrischen Versorgungsspannung über eine Leitung 24. Der hier gezeigte Schalter 17 weist eine weitere Schaltstellung "0" auf, bei der der Elektromotor 4 weder mit der veränderlichen Ausgangsspannung des Leistungsteiles 25 noch mit der elektrischen Netzspannung verbunden ist. Es handelt sich hierbei um eine Nullstellung, die den Elektromotor 4 komplett spannungsfrei schaltet. Auch das Stellglied 20 ist in dieser Schaltstellung spannungsfrei geschaltet. Diese Schaltstellung ist insbesondere für Wartungsarbeiten oder Austauscharbeiten vorgesehen und ermöglicht in Kombination mit einem abschließbaren und berührungssicher ausgeführten Schalter 17 ein normenkonformes Arbeiten an einem Elektromotor und/oder einem Drehzahlregelgerät. In diesem Ausführungsbeispiel ist der Schalter mit seinen Kontakten auf der Netzseite des Stellgliedes angeordnet. Im Rahmen der Erfindung liegt auch eine motorseitige Schalteranordnung. In diesem Fall verbinden die Kontakte des Schalters die Motorzuleitung 9 wahlweise mit dem Ausgang des Energiestellers oder mit der Netzzuleitung.

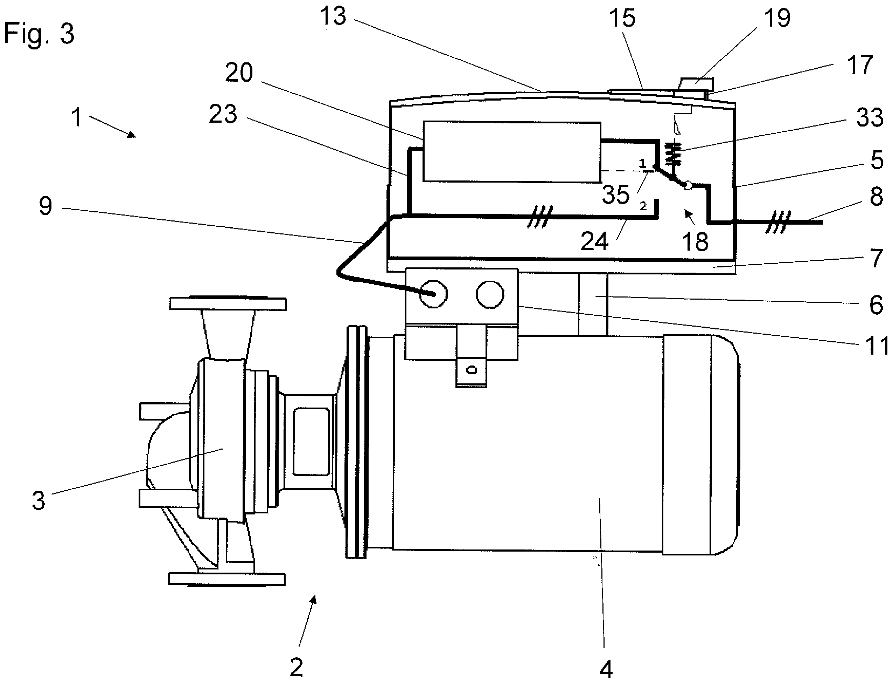

Die Fig. 3 zeigt eine weitere erfindungsgemäße Anordnung 1, bei der an einem Elektromotor 4 eines Kreiselpumpenaggregates 2 ein Drehzahlregelgerät 5 angebracht ist. Das Drehzahlregelgerät 5 ist über ein Halteelement 6 und eine Aufnahmeplatte 7 am Elektromotor 4 befestigt. Auf der Gehäuseoberseite 13 ist ein Schalter 17 mit einem als Drehgriff gestalteten Betätigungselement 19 angeordnet. Auf der Gehäuseoberseite 13 befindet sich ein Anzeige- und/oder Bedienteil 15, das hier zum Teil erkennbar ist.

Durch eine innerhalb des Drehzahlregelgerätes 5 dargestellte Schaltskizze wird nachfolgend die Wirkungsweise dieser erfindungsgemäßen Kreiselpumpenanordnung erläutert. Aus Gründen der Übersichtlichkeit sind mehrphasige Leitungen erneut gebündelt dargestellt. Im Innern des Drehzahregelgerätes 5 ist ein Stellglied 20 gezeigt. Auf die Darstellung weiterer elektronischer Komponenten und Baugruppen wurde aus Gründen der Übersichtlichkeit verzichtet. Der in der Schaltskizze gezeigte Schalter 17 mit dessen Kontaktelement 18 ist durch ein Vorspannelement 33 derart vorgespannt, dass er im Falle eines Fehlers einer Komponente oder Baugruppe innerhalb des Drehzahlregelgerätes 5, insbesondere einem Fehler des Stellgliedes 20, den Elektromotor 4 selbsttätig auf die zweite Schalterstellung umschaltet. Im bestimmungsgemäßen Betrieb wird der Schalter 17 durch ein Selbsthaltemittel 35 gehalten. Das Selbsthaltemittel 35 ist durch eine angelegte Haltespannung in seiner aktiven Position gehalten. Das Selbsthaltemittel 35 ist dabei elektromagnetisch durch eine Spannung aus dem Stellglied 20 des Drehzahlregelgerätes 5 gehalten. Alternativ kann das Selbsthaltemittel 35 durch eine Spannung aus einer Regelelektronik des Drehzahlregelgerätes 5 gehalten sein. Der Schalter 17 ist jederzeit per Hand in seine Schaltstellung "2" schaltbar. Der Schalter 17 öffnet dabei das Selbsthaltemittel 35. Bei einem Wegfall der Haltespannung öffnet das Selbsthaltemittel 35 und das Vorspannelement 33 des Schalters 17 schaltet den Schalter 17 in seine zweite Schaltstellung. Bei einem Ausfall oder Fehler des Stellgliedes 20 und/oder einer anderen Komponente oder Baugruppe wird somit ein automatisches Umschalten auf das Netz erwirkt.

## Patentansprüche

1. Kreiselpumpenanordnung mit Kreiselpumpe, Elektromotor und einem Steuer- und/oder Regelgerät, wobei das Steuer- und/oder Regelgerät am Elektromotor angebracht ist, wobei das Steuer- und/oder Regelgerät an eine starre elektrische Versorgungsspannung angeschlossen ist, wobei ein Stellglied des Steuer- und/oder Regelgeräts die Drehzahl und/oder das Drehmoment des Elektromotors mit einer variablen elektrischen Ausgangsgröße beeinflusst,
**dadurch gekennzeichnet, dass**
das Steuer- und/oder Regelgerät (5) einen von Hand betätigbaren Schalter (17) aufweist, der eine erste Schaltstellung aufweist, bei der der Schalter (17) den Elektromotor (4) über das Stellglied (20) des Steuer- und/oder Regelgerätes (5) elektrisch mit der Versorgungsspannung verbindet, so dass der Elektromotor (4) mit der variablen elektrischen Ausgangsgröße des Stellgliedes (20) gespeist wird, und eine zweite Schaltstellung aufweist, bei der der Schalter (17) den Elektromotor (4) mit der starren elektrischen Versorgungsspannung elektrisch verbindet, so dass der Elektromotor (4) an der starren Versorgungsspannung betrieben wird, wobei der Schalter (17) bei einem Fehler des Stellgliedes (20) und/oder einer anderen elektronischen Komponente des Steuer- und/oder Regelgerätes (5) selbsttätig den Elektromotor (4) auf die Versorgungsspannung umschaltet.

2. Kreiselpumpenanordnung nach Anspruch 1, **dadurch gekennzeichnet, dass** der Schalter (17) in das Gehäuse des Steuer- und/oder Regelgeräts (5) integriert ist.

3. Kreiselpumpenanordnung nach Anspruch 1 oder 2, **dadurch gekennzeichnet, dass** das Steuer- und/oder Regelgerät (5) am Elektromotor (4) angebaut ist oder mit dem Elektromotor (4) eine bauliche Einheit bildet oder in diesen integriert ist.

4. Kreiselpumpenanordnung nach Anspruch 1, 2 oder 3, **dadurch gekennzeichnet, dass** das Steuer- und/oder Regelgerät (5) an eine mehrphasige, insbesondere dreiphasige, elektrische Versorgungsspannung angeschlossen ist und das Stellglied (20) den Elektromotor (4) mit einer veränderlichen mehrphasigen, insbesondere dreiphasigen, elektrischen Spannung versorgt und dass der Schalter (17) mehrpolig, insbesondere dreipolig, ausgeführt ist.

5. Kreiselpumpenanordnung nach einem der Ansprüche 1 bis 4, **dadurch gekennzeichnet, dass** der Schalter (17) elektromechanisch schaltet.

6. Kreiselpumpenanordnung nach einem der Ansprüche 1 bis 5, **dadurch gekennzeichnet, dass** der Schalter (17) eine weitere Schaltstellung, vorzugsweise eine Nullstellung, aufweist.

7. Kreiselpumpenanordnung nach einem der Ansprüche 1 bis 6, **dadurch gekennzeichnet, dass** der Schalter (17) abschließbar und/oder berührungssicher ausgeführt ist.

8. Kreiselpumpenanordnung nach einem der Ansprüche 1 bis 7, **dadurch gekennzeichnet, dass** das Steuer- und/oder Regelgerät (5) an eine mehrphasige elektrische Versorgungsspannung fester Frequenz angeschlossen ist und das Stellglied (20) den Elektromotor (4) mit einer mehrphasigen elektrischen Spannung variabler Frequenz versorgt.

9. Kreiselpumpenanordnung nach Anspruch 8, **dadurch gekennzeichnet, dass** der Schalter (17) wahlweise den Elektromotor (4) mit der Spannung variabler Frequenz oder mit der Versorgungsspannung fester Frequenz verbindet oder gegebenenfalls den Elektromotor (4) von der Versorgungsspannung und der Spannung variabler Frequenz des Stellglieds (20) trennt.

10. Kreiselpumpenanordnung nach Anspruch 8 oder 9, **dadurch gekennzeichnet, dass** der Schalter (17) wahlweise das Stellglied (20) oder den Elektromotor (4) mit der Versorgungsspannung verbindet oder gegebenenfalls das Stellglied (20) und den Elektromotor (4) von der Versorgungsspannung trennt.

11. Kreiselpumpenanordnung nach Anspruch 8, 9 oder 10, **dadurch gekennzeichnet, dass** das Steuer- und/oder Regelgerät (5) ein Drehzahlregelgerät, insbesondere gebildet durch einen Frequenzumrichter mit Regelelektronik (30), ist, das die Drehzahl des Elektromotors (4) regelt.

## Claims

1. Rotary pump arrangement having a rotary pump, electric motor and an open-loop and/or closed-loop controller, wherein the open-loop and/or closed-loop controller is mounted on the electric motor, wherein the open-loop and/or closed-loop controller is connected to a rigid electrical supply voltage, wherein an actuator element of the open-loop and/or closed-loop controller influences the rotational speed and/or the torque of the electric motor with a variable electric output parameter,
**characterized in that**
the open-loop and/or closed-loop controller (5) has a switch (17) which can be activated manually and has a first switched position, in which the switch (17) electrically connects the electric motor (4) to the supply voltage via the actuator element (20) of the open-loop and/or closed-loop controller (5), with the result that the electric motor (4) is fed with the variable electrical output parameter of the actuator element (20), and a second switched position, in which the switch (17) electrically connects the electric motor (4) to the rigid electrical supply voltage, with the result that the electric motor (4) is operated on the rigid supply voltage, wherein in the case of a fault in the actuator element (20) and/or in some other electronic components of the open-loop and/or closed-loop controller (5) the switch (17) automatically switches the electric motor (4) over to the supply voltage.

2. Rotary pump arrangement according to Claim 1, **characterized in that** the switch (17) is integrated into the housing of the open-loop and/or closed-loop controller (5).

3. Rotary pump arrangement according to Claim 1 or 2, **characterized in that** the open-loop and/or closed-loop controller (5) is built onto the electric motor (4) or forms a structural unit with the electric motor (4) or is integrated therein.

4. Rotary pump arrangement according to Claim 1, 2 or 3, **characterized in that** the open-loop and/or closed-loop controller (5) is connected to a multi-phase, in particular three-phase, electrical supply voltage, and the actuator element (20) supplies the electric motor (4) with a variable, multi-phase, in particular three-phase, electrical voltage, and **in that** the switch (17) is embodied in a multi-pole fashion, in particular three-pole fashion.

5. Rotary pump arrangement according to one of Claims 1 to 4, **characterized in that** the switch (17) switches electromechanically.

6. Rotary pump arrangement according to one of Claims 1 to 5, **characterized in that** the switch (17) has a further switched position, preferably a zero position.

7. Rotary pump arrangement according to one of Claims 1 to 6, **characterized in that** the switch (17) is embodied in a lockable and/or non-touchable fashion.

8. Rotary pump arrangement according to one of Claims 1 to 7, **characterized in that** the open-loop and/or closed-loop controller (5) is connected to a multi-phase electrical supply voltage with a fixed frequency, and the actuator element (20) supplies the electric motor (4) with a multi-phase electrical voltage with a variable frequency.

9. Rotary pump arrangement according to Claim 8, **characterized in that** the switch (17) optionally connects the electric motor (4) with the voltage with a variable frequency or with the supply voltage with a fixed frequency or, if appropriate, disconnects the electric motor (4) from the supply voltage and from the voltage with a variable frequency of the actuator element (20).

10. Rotary pump arrangement according to Claim 8 or 9, **characterized in that** the switch (17) optionally connects the actuator element (20) or the electric motor (4) with the supply voltage, or, if appropriate, disconnects the actuator element (20) and the electric motor (4) from the supply voltage.

11. Rotary pump arrangement according to Claim 8, 9 or 10, **characterized in that** the open-loop and/or closed-loop controller (5) is a rotational speed closed-loop controller, in particular formed by a frequency converter with control electronics, (30) which controls the rotational speed of the electric motor (4).

## Revendications

1. Arrangement de pompe centrifuge comprenant une pompe centrifuge, un moteur électrique et un contrôleur et/ou régulateur, le contrôleur et/ou régulateur étant monté sur le moteur électrique, le contrôleur et/ou régulateur étant raccordé à une tension d'alimentation électrique fixe, un actionneur du contrôleur et/ou régulateur influençant la vitesse de rotation et/ou le couple du moteur électrique avec une grandeur de sortie électrique variable,
**caractérisé en ce que**
le contrôleur et/ou régulateur (5) possède un commutateur (17) pouvant être actionné manuellement, lequel possède une première position de commutation dans laquelle le commutateur (17) relie électriquement le moteur électrique (4) à la tension d'alimentation par le biais de l'actionneur (20) du contrôleur et/ou régulateur (5), de sorte que le moteur électrique (4) est alimenté avec la grandeur de sortie électrique variable de l'actionneur (20), et une deuxième position de commutation dans laquelle le commutateur (17) relie électriquement le moteur électrique (4) à la tension d'alimentation électrique fixe, de sorte que le moteur électrique (4) fonctionne à la tension d'alimentation fixe, le commutateur (17), en présence d'un défaut de l'actionneur (20) et/ou d'un autre composant électronique du contrôleur et/ou régulateur (5) permutant automatiquement le moteur électrique (4) sur la tension d'alimentation.

2. Arrangement de pompe centrifuge selon la revendication 1, **caractérisé en ce que** le commutateur (17) est intégré dans le boîtier du contrôleur et/ou régulateur (5).

3. Arrangement de pompe centrifuge selon la revendication 1 ou 2, **caractérisé en ce que** le contrôleur et/ou régulateur (5) est monté sur le moteur électrique (4) ou forme une unité structurale avec le moteur électrique (4) ou est intégré dans celui-ci.

4. Arrangement de pompe centrifuge selon la revendication 1, 2 ou 3, **caractérisé en ce que** le contrôleur et/ou régulateur (5) est raccordé à une tension d'alimentation électrique multiphasée, notamment triphasée, et l'actionneur (20) alimente le moteur électrique (4) avec une tension électrique multiphasée, notamment triphasée, variable, notamment triphasée, et **en ce que** le commutateur (17) est réalisé multipolaire, notamment tripolaire.

5. Arrangement de pompe centrifuge selon l'une des revendications 1 à 4, **caractérisé en ce que** le commutateur (17) effectue une commutation électromécanique.

6. Arrangement de pompe centrifuge selon l'une des revendications 1 à 5, **caractérisé en ce que** le commutateur (17) possède une position de commutation supplémentaire, notamment une position neutre.

7. Arrangement de pompe centrifuge selon l'une des revendications 1 à 6, **caractérisé en ce que** le commutateur (17) est réalisé verrouillable et/ou manipulable à mains nues.

8. Arrangement de pompe centrifuge selon l'une des revendications 1 à 7, **caractérisé en ce que** le contrôleur et/ou régulateur (5) est raccordé à une tension d'alimentation électrique multiphasée à fréquence fixe et l'actionneur (20) alimente le moteur électrique (4) avec une tension électrique multiphasée à fréquence variable.

9. Arrangement de pompe centrifuge selon la revendication 8, **caractérisé en ce que** le commutateur (17) relie le moteur électrique (4), au choix, avec la tension à fréquence variable ou avec la tension d'alimentation à fréquence fixe ou, le cas échéant, déconnecte le moteur électrique (4) de la tension d'alimentation et de la tension à fréquence variable de l'actionneur (20).

10. Arrangement de pompe centrifuge selon la revendication 8 ou 9, **caractérisé en ce que** le commutateur (17) relie l'actionneur (20) ou le moteur électrique (4), au choix, avec la tension d'alimentation ou, le cas échéant, déconnecte l'actionneur (20) et le moteur électrique (4) de la tension d'alimentation.

11. Arrangement de pompe centrifuge selon la revendication 8, 9 ou 10, **caractérisé en ce que** le contrôleur et/ou régulateur (5) forme un régulateur de vitesse, notamment formé par un variateur de fréquence muni d'une électronique de régulation (30) qui régule la vitesse de rotation du moteur électrique (4).
